# FASCICULE DE BREVET EUROPEEN

(11) **EP 1 342 355 B1**
(45) Date de publication et mention de la délivrance du brevet: **23.04.2008**
(21) Numéro de dépôt: 01270993.7
(22) Date de dépôt: 13.12.2001
(51) Int. Cl.: H04L 29/06, H04Q 7/22, H04L 12/58

(54) **PROCEDE D'ACHEMINEMENT DE MESSAGES ELECTRONIQUES**
VERFAHREN ZUM WEGLENKEN VON ELEKTRONISCHEN NACHRICHTEN
METHOD FOR ROUTING ELECTRONIC MESSAGES

(30) Priorité: 13.12.2000 FR 0016266
(43) Date de publication de la demande: 10.09.2003
(73) Titulaire: SAGEM Communication, 75015 Paris (FR)
(72) Inventeur: PORATO, Marc, F-60240 Loconville (FR)
(74) Mandataire: Schmit, Christian Norbert Marie
(86) Numéro de dépôt international: PCT/FR2001/003988
(87) Numéro de publication internationale: WO 2002/049317

(56) Documents cités:
- EP-A- 1 003 344
- WO-A-00/55781
- WO-A-96/24213

## Description

La présente invention a pour objet un procédé d'acheminement de messages électroniques. Le domaine de l'invention est celui des messages électroniques transitant sur un réseau de télécommunication. Les messages électroniques sont par exemple des messages du type e-mail (message électronique ou e-mail), ou des messages courts aussi connus sous la dénomination de SMS (Short Message Service, soit service de message court). La liste n'est pas exhaustive. Le but de l'invention est de permettre à une entité d'envoyer, des messages complémentaires de manière ciblée. Un autre but de l'invention de permettre à une entité, dont ce n'est pas la destination, de proposer des services d'émission de messages électroniques.

Dans l'état de la technique on connaît des opérateurs de téléphonie mobile qui proposent d'offrir du temps de communication en échange de l'acceptation d'être interrompu pendant la communication par des messages publicitaires. Un utilisateur d'un tel service souscrit donc un abonnement auprès d'un opérateur de téléphonie mobile qui propose ces services. L'utilisateur se voit alors attribuer un certain nombre de minutes de communication gratuites. Pour accéder à ce service il compose alors un code avant de composer le numéro de téléphone de la personne qu'il souhaite joindre. Le code qu'il compose permet d'indiquer qu'il souhaite avoir recours au service de téléphonie gratuite. Au moment où l'opérateur reçoit la demande de connexion il envoie alors à l'utilisateur initiant l'appel un message publicitaire sonore. Puis, il établit la communication avec la personne que l'utilisateur souhaite joindre. Au cours de la communication, à intervalles réguliers par exemple de 90 secondes, l'utilisateur et son correspondant sont interrompus par des diffusions sonores d'autres messages publicitaires. Ce système présente deux inconvénients majeurs.

Le premier inconvénient est qu'il est particulièrement bien adapté à des communications vocales en direct, mais pas pour la transmission de messages électronique dont le temps de transmission est très cours, souvent moins d'une seconde.

Le deuxième inconvénient est que si la diffusion du message complémentaire atteint alors à la fois l'utilisateur initiateur de la conversation et la personne qui répond au téléphone, ce mode de diffusion provoque une gêne qui peut nuire au suivi d'une conversation. De même cela peut provoquer une gêne qui peut aussi empêcher de comprendre le message complémentaire.

Dans l'état de la technique on connaît aussi des entités qui proposent un envoi de message SMS gratuitement via un site Internet. Le principe est que l'utilisateur peut se connecter sur un tel site Internet, composer un message SMS et l'envoyer sans que cela ne lui coûte rien. Cependant l'envoi doit être validé par la sélection d'un bandeau publicitaire sur la page Internet permettant la composition du message SMS. La sélection du bandeau envoie vers un autre site. Cet autre site présente alors, en général, les activités d'une autre entité. Ainsi dans ce cas de figure l'émetteur du message se voit obligé d'aller consulter un autre site sur Internet. Cependant selon le mode de connexion à Internet, et l'encombrement du réseau, l'utilisateur peut très bien ne jamais arriver sur cet autre site, où tout simplement interrompre le chargement de cet autre site. Cela ne perturbe pas l'émission du message SMS mais on n'aboutit pas au résultat souhaité à savoir que l'utilisateur visualise cet autre site. De plus, il est impossible, par ce moyen, de toucher le destinataire du message qui à été composé.

Le document WO 96 24213 divulgue une méthode d'acheminement de messages électroniques. Un message est acheminé de l'émetteur vers le serveur du récepteur du message. Le serveur du récepteur du message modifie alors le message pour y ajouter un message publicitaire. L'entité sponsorisant l'ajout de ce message publicitaire prend alors en charge les coûts liés au transport du message du serveur au récepteur. De plus, l'ajout du message publicitaire ne se fait pas sur tout les messages transmis au destinataire, mais sur une partie déterminée selon des critères temporels ou statistiques.

WO 00 55781 décrit l'insertion d'un message publicitaire intégré dans un message personnel sans aucun moyen pour l'émetteur de déterminer pour chaque message s'il sera concerné ou pas par cet ajout. EP-A-1 003 344 décrit la transmission parallèle d'un message publicitaire et d'un appel subventionné.

Un autre inconvénient est que pour pouvoir profiter d'un tel système l'utilisateur doit nécessairement disposer d'un accès au réseau Internet.

Dans l'invention on résout ces problèmes en permettant à un utilisateur d'un appareil mettant en oeuvre le procédé selon l'invention de composer un premier message électronique, de saisir un identifiant d'un destinataire et de valider le message et l'identifiant en indiquant qu'il souhaite avoir recours à un service d'émission du message qui est gratuit pour lui. Au cours de son acheminement le message composé est alors intercepté par un opérateur qui détecte dans le message un champ correspondant à une émission d'un message gratuit. Suite à cette détection, l'opérateur extrait du message l'identifiant du destinataire et l'opérateur compose un nouveau message pour le destinataire. Ce nouveau message correspond à un message complémentaire de celui de la personne qui a bénéficié de l'émission gratuite du premier message. Le destinataire du premier message va alors recevoir un message final comportant à la fois le premier message et un message complémentaire de l'entité subventionnant l'émission du message. Cette composition du message intervient suite à un accord entre l'opérateur et une entité qui subventionne l'émission de ces messages.

Dans une variante, le destinataire peut aussi recevoir deux messages l'un comportant le premier message composé, un deuxième comportant le message complémentaire de l'entité subventionnant l'émission du message.

Au moment où il compose le deuxième message complémentaire l'opérateur met aussi à jour des compteurs permettant d'effectuer des bilans sur le nombre de messages par émetteur et par fournisseur de messages complémentaires.

Dans une variante le premier message, celui composé par l'utilisateur, est adressé à un serveur dédié à l'envoi de messages subventionnés. Dans ce cas il n'est plus utile d'avoir recours à un champ indiquant l'émission d'un message subventionné, puisque le seul fait d'adresser un message à ce serveur signifie qu'il s'agit d'une émission d'un message subventionné. Dans cette variante le message composé comporte un identifiant du destinataire final du message. Cet identifiant peut être un numéro de téléphone, une adresse électronique, ou une autre référence connue du serveur. Le serveur se charge alors de la gestion précédemment citée pour la composition du message complémentaire.

L'invention à donc pour objet un procédé d'acheminement de message électronique dans lequel:
- on compose un premier message électronique,
- on saisit un identifiant d'un destinataire,
- on valide le message et l'identifiant,
- on achemine le premier message vers l'appareil identifié par l'identifiant via un réseau,
caractérisé en ce que:
- on récupère l'identifiant du destinataire au cour de l'acheminement, si un drapeau d'interception est renseigné,
- on produit un deuxième message électronique,
- on achemine le deuxième message vers un appareil identifié par l'identifiant via un réseau.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1a: Une illustration de moyens utiles pour la mise en oeuvre du procédé selon l'invention.
- Figure 1b: Une illustration de la structure d'un message électronique.
- Figure 2a: Une illustration d'étapes du procédé selon l'invention.
- Figure 2b : Une illustration d'étape du procédé selon une variante de l'invention.

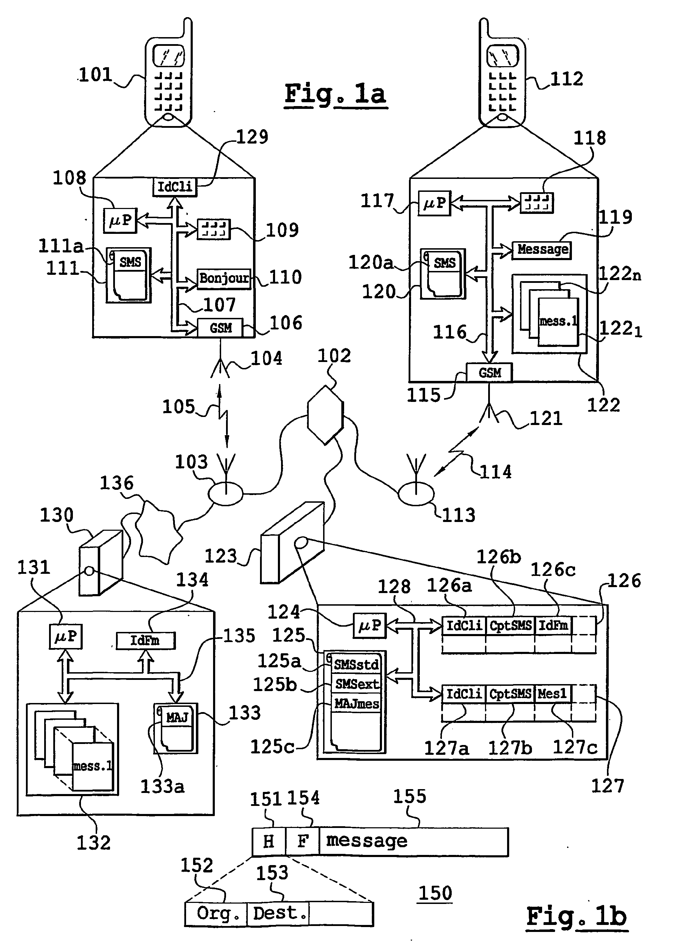

La figure 1 montre un téléphone 101 mobile connecté à un réseau 102 GSM. Dans la présente description on considère qu'un message électronique est échangé entre deux téléphones mobiles fonctionnant selon la norme GSM. Cependant la description reste encore valable si la norme de téléphonie n'est pas la norme GSM mais la norme UMTS, la norme IMT 2000 ou une autre norme. De même la description reste valable s'il s'agit d'un e-mail échangé entre deux PC connectés au réseau Internet, ou d'un message SMS échangé entre un PC, connecté au réseau Internet puis au réseau GSM, et un téléphone mobile de ce réseau GSM.

Le téléphone 101 est connecté au réseau 102 via une station 103 de base du réseau 102. Le téléphone 101 comporte donc une antenne 104 permettant d'établir une liaison 105 hertzienne avec la station 103. L'antenne 104 est d'autre part connectée à des circuits 106 GSM. Le rôle des circuits 106 est d'une part de traiter des signaux analogiques reçus par l'antenne 104 afin de produire des signaux numériques, d'autre part de produire des signaux analogiques modulés à partir des signaux numériques reçus via un bus 107. Un bus est un ensemble de films ou de pistes comportant ces éléments en nombre suffisants pour véhiculer des signaux adresses, de commandes, de données, d'horloges, d'interruptions et d'alimentation.

Le téléphone 101 comporte aussi un microprocesseur 108, un clavier 109, un écran 110 et une mémoire 111. Les éléments 108 à 111 sont connectés au bus 107. Le téléphone 101 est décrit de manière fonctionnelle afin de permettre une meilleure compréhension de la mise en oeuvre du procédé selon l'invention. Ainsi le microprocesseur 108 effectue un certain nombre de taches commandé par des codes d'instruction enregistrés dans une zone de la mémoire 111. Ainsi la mémoire 111 comporte une zone 111a qui commande le microprocesseur 108 lorsque le téléphone 101 a une activité liée à l'envoi ou à la réception du message SMS. Le clavier 109 permet à un utilisateur du téléphone 101 de saisir un message électronique, de saisir un identifiant, et de valider à la fois le message de l'identifiant, provoquant ainsi l'envoi du message composé. L'envoi se fait alors via les circuit 106 et l'antenne 104. L'écran 110 permet de visualiser le message que l'utilisateur du téléphone 101 est en train de composer ou qu'il a reçu. II s'agit ici d'un emploi parmi d'autres de l'écran 110 et du clavier 109.

Le téléphone 101 comporte aussi une mémoire 129 identifiant. Cette mémoire comporte un code qui permet à l'opérateur d'identifier le client utilisant le téléphone 101. Cet identifiant est par exemple un numéro d'un téléphone de l'utilisateur, ou le numéro d'une carte SIM (Subscriber Identifier Modul, ou module d'identification du souscripteur).

La figure 1a montre un deuxième téléphone mobile 112 connecté au réseau 102 via une station de base 113 et une liaison hertzienne 114. Le téléphone 112 comporte des éléments 115 à respectivement 120 identiques dans leur fonction aux éléments 106 à respectivement 111 précédemment décrits. Les circuits 115 GSM sont connectés à une antenne 121 permettant d'établir la liaison 114 hertzienne. Le téléphone 112 comporte aussi une mémoire 122 connecté au bus 116. La mémoire 122 est une mémoire de message, de type SMS, reçu. Cette mémoire existe aussi dans le téléphone 101 mais n'a pas été représentée car dans l'exemple on considère que le téléphone 101 est l'appareil émetteur de message et le téléphone 112 est l'appareil récepteur. La mémoire 122 comporte un certain nombre de messages numérotés 122.1 à 122.n.

En règle générale ces messages sont des messages SMS. Cependant, dans une variante de l'invention, la mémoire 122 pourrait aussi comporter des e-mails. Il est en effet possible de recevoir et d'envoyer des e-mails depuis un téléphone mobile.

La figure 1a montre aussi un serveur 123 connecté au réseau 102. Dans un exemple préféré on considère que le serveur 123 est géré par un opérateur qui met en oeuvre le réseau 102 GSM. Le serveur 123 comporte un microprocesseur 124, une mémoire 125 de programme, la mémoire 126 de gestion des clients de l'opérateur gérant le serveur 123, et une mémoire 127 de fournisseurs. La mémoire 127 permet à l'opérateur de gérer une relation avec des fournisseurs de messages complémentaires. Ces fournisseurs de messages complémentaires sont ceux qui subventionnent l'envoi de messages SMS par le procédé selon l'invention. Les éléments 124 à 127 sont connectés par un bus 128. Le serveur 123 comporte aussi des moyens pour se connecter à divers réseaux, comme le réseau 102 GSM ou le réseau 136 Internet. Ces moyens sont connus et ne sont pas représentés pour ne pas surcharger le dessin. La mémoire 125 comporte entre autres des codes d'instructions commandant le microprocesseur 124 au cours de ses diverses activités. La mémoire 125 comporte notamment une zone 125a qui comporte des codes d'instructions qui commandent le microprocesseur 124 lorsque celui-ci gère des messages SMS de manière standard, une zone 125b lorsque le microprocesseur 124 gère des messages SMS de manière étendue, c'est à dire selon le procédé selon l'invention, et une zone 125c qui commande le microprocesseur 125 lors d'une mise à jour de messages complémentaires, c'est à dire de la mémoire 127. La mémoire 126 est divisée en plusieurs lignes et en plusieurs colonnes. La structure qui va être décrite n'est qu'un exemple permettant de structurer les informations citées. Dans l'exemple chaque ligne correspond à un client de l'opérateur de téléphonie gérant le serveur 123. Chaque colonne correspond à un renseignement sur ce client. Une première colonne 126a comporte un identifiant du client. Une deuxième colonne 126b comporte un compteur permettant de comptabiliser le nombre de messages que le client a envoyé grâce au procédé selon l'invention. La mémoire 126 comporte aussi, dans une variante de l'invention, une zone 126c comportant un identifiant d'un fournisseur de messages complémentaires. Cet identifiant correspond au fournisseur qui subventionne l'envoi des messages SMS du client. Un autre de ces champs, non représenté, est par exemple un nombre maximum de SMS que le client peut envoyer grâce au procédé selon l'invention. Il existe d'autres champs fournissant d'autres renseignements sur les clients mais ils ne sont pas intéressants pour le procédé selon l'invention.

La mémoire 127 est structurée, par exemple, de la même manière que la mémoire 126. Chaque ligne de la mémoire 127 correspond à un fournisseur de messages complémentaires. La mémoire 127 comporte une première colonne 127a comportant un identifiant du fournisseur de message. La deuxième colonne 127b comporte le nombre total du message SMS que le fournisseur a subventionné jusqu'à présent. Les colonnes 127a à 127n comportant des messages complémentaires que le fournisseur de messages complémentaires souhaite voir insérés dans les messages SMS dont il subventionne l'envoi.

Les mémoires 126 et 127 ont, dans l'exemple choisi, une structure de table unique. Dans la pratique, les données enregistrées dans ces tables, 126 et 127, peuvent être réparties dans un plus grand nombre de tables. Cela est notamment le cas dans une base de données relationnelle par exemple. Sur la figure 1a toutes les mémoires d'un appareil donné sont représentées de manière discrète et éclatée. Physiquement toutes ces mémoires peuvent être plusieurs zones d'une vaste mémoire réalisée à l'aide d'un seul ou de plusieurs composants électroniques.

La figure 1a montre que le serveur 123 est connecté à un serveur 130 via le réseau 136 Internet. Le serveur 130 est par exemple un serveur d'un fournisseur de message. Un fournisseur de messages complémentaires est, par exemple, une entité qui a passé un accord avec un opérateur de téléphonie pour faire de la publicité. Le fournisseur de messages complémentaires subventionne donc l'envoi de SMS en échange de l'insertion dans les SMS, ou de l'envoi d'autres SMS comportant, d'informations qui intéresse le fournisseur de messages complémentaires. Ainsi le fournisseur de messages complémentaires peut proposer à ses clients l'émission de messages SMS gratuits via un opérateur avec lequel le fournisseur a un accord. Le client, ou cible, du fournisseur de messages complémentaires devient donc aussi client de l'opérateur de téléphonie mobile, si ce ne que les droits à acquitter pour être client de l'opérateur de téléphonie sont pris en charge par le fournisseur de messages complémentaires.

Le serveur 130 comporte un microprocesseur 131, une mémoire 132 de message, une mémoire 133 de programme et une mémoire 134 identifiant. Les éléments 131 à 134 sont connectés à un bus 135. Le serveur 130 comporte aussi des moyens pour se connecter au réseau 136 Internet. Ces moyens sont connus et ne sont pas représentés. La mémoire 133 comporte une zone 133a comportant des codes d'instructions qui commandent le microprocesseur 131 lorsque le serveur 130 est en communication avec le serveur 123 afin d'effectuer une mise à jour du contenu de la mémoire 127 de messages. La mémoire 132 comporte des messages complémentaires que des fournisseurs de messages complémentaires souhaitent insérer dans les messages SMS qu'ils subventionnent. Lors d'une mise à jour des messages, les messages de mémoire 132 sont transférés dans une zone adéquate de la mémoire 127 du serveur 123.

La figure 1b montre une structure d'un message 150 SMS selon l'invention. Un message 150, comme tous les messages SMS, comporte un en tête 151. L'en tête 151 comporte au moins un identifiant 152 de l'émetteur de message, un identifiant 153 du destinataire du message. Dans l'invention l'en tête est suivi d'un champ drapeau 154 indiquant que ce message est envoyé grâce à une subvention d'un fournisseur de messages. Le champ 154 est suivi du corps 155 du message. Dans le cas de l'envoi d'un message e-mail la structure du message est la même. En effet, un message e-mail comporte des identifiants de l'émetteur, du destinataire ainsi qu'un certain nombre de champs qui peuvent être réutilisés pour réaliser le drapeau.

Le champ drapeau peut comporter un code prédéfini, ou un numéro de téléphone. En particulier si on envisage une réalisation avec un serveur dédié, le champ drapeau peut alors contenir un numéro de téléphone du destinataire final du message, le message étant directement envoyé au serveur dédié.

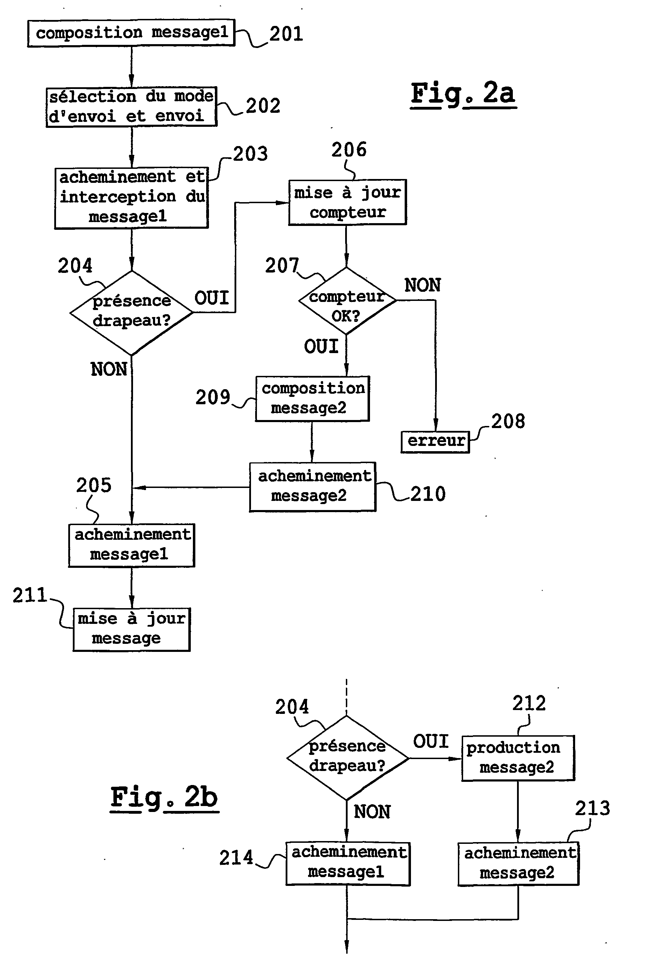

La figure 2a montre une étape 201 préliminaire de composition d'un premier message. Dans l'étape 201 l'utilisateur du téléphone 101 utilise le clavier 109 pour composer un message. Dans cet exemple il s'agit d'un message SMS. Ce message comporte donc au maximum 140 caractères alphanumériques. Dans une variante de l'invention, l'utilisateur du téléphone 101 peut avoir à saisir en tout premier un drapeau correspondant au champ 154 de la figure 1b. Ce drapeau est, dans un exemple, un code permettant d'identifier le fournisseur de messages complémentaires qui subventionne l'envoi de ce message SMS. Le drapeau peut aussi être un code unique est prédéterminé. Dans une autre variante de l'invention ce drapeau est automatiquement inséré dans le message au moment de la validation et de l'envoi du message. Dans une variante avec un serveur dédié, le serveur récupère l'adresse finale du message, et l'adresse du serveur est utilisée par le téléphone 101 pour effectuer l'émission.

Après ou avant avoir composé le message l'utilisateur du téléphone 101 utilise le clavier pour saisir un identifiant du destinataire de message. L'identifiant du destinataire est, par exemple, un numéro de téléphone d'un téléphone du destinataire.

L'utilisateur du téléphone 101 suit le déroulement de ces opérations, de composition et de saisie, sur l'écran 110. On passe à une étape 202 de sélection du mode d'envoi, et d'envoi proprement dit du message. Dans l'étape 202 l'utilisateur choisit si le message qu'il vient de composer sera envoyé grâce à la subvention d'un fournisseur de messages complémentaires, ou grâce à son propre abonnement téléphonique. Cette sélection peut s'effectuer soit par l'insertion manuelle précédemment décrite d'un drapeau dans le message, soit par le mode de validation de l'envoi. Il peut par exemple y avoir une touche de validation pour l'envoi en utilisant son propre abonnement téléphonique, et une touche de validation de l'envoi pour avoir recours à un fournisseur de messages complémentaires. Ces deux touches sont alors préalablement paramétrées par l'utilisateur du téléphone 101. Le mode d'envoi peut aussi être sélectionné via un menu du téléphone mobile. Dans le cas d'un serveur dédié l'adresse d'envoi du message étant alors l'adresse du serveur dédié, cela suffit à déterminer le mode.

Une fois la validation effectuée on passe à une étape 203 d'acheminement et d'interception du premier message. Ici interception sert principalement à nommer l'étape 203. Dans la pratique le message n'est pas réellement intercepté, mais il subit un traitement supplémentaire au cours de son acheminement. Dans l'étape 203 l'envoi à été validé par l'utilisateur du téléphone 101. Le message est alors acheminé jusqu'au serveur 123 via les circuits 106, la liaison 105, et le réseau 102. Le microprocesseur 124, commandé par des codes d'instructions de la zone 125a, détecte l'arrivée d'un message SMS. Le microprocesseur 124 détecte dans ce message SMS la présence ou l'absence d'un drapeau. Il s'agit de l'étape 204 de recherche du drapeau. L'acheminement d'un message SMS par un opérateur de téléphonie mobile est un procédé connu, dans l'invention la différence apparaît avec le traitement qui est effectué par l'opérateur sur le message SMS au cours de son acheminement.

Dans l'étape 204 le microprocesseur 124, commandé par des codes d'instructions de la zone 125a parcourt tous les messages SMS acheminés par le serveur 123, à la recherche d'un drapeau éventuel indiquant que l'envoi du SMS est subventionné par un fournisseur de messages complémentaires. Si ce drapeau n'est pas détecté, on passe à une étape 205 d'acheminement du message 1.

Dans l'étape 205 le premier message est acheminé vers son destinataire de manière connue. Le message est reçu dans le téléphone 112 et enregistré dans la mémoire 122. L'utilisateur du téléphone 112 peut alors visualiser et ou effacer le message. Ces actions sont réalisables par l'intermédiaire du clavier 118 et de l'écran 119. Ces actions sont effectuées sous le contrôle du microprocesseur 117 commandé par des codes instructions de la zone 120a de la mémoire 120.

Si dans l'étape 204 on détecte un drapeau on passe à une étape 206 de mise à jour du compteur.

Dans l'étape 206, le microprocesseur 124 a détecté la présence d'un drapeau indiquant que l'envoi de ce message est pris en charge par un fournisseur de messages complémentaires. Le microprocesseur 124 est alors commandé par des codes d'instructions de la zone 125b de gestion des messages SMS en mode étendu. On parle de mode étendu par extension par rapport au mode normal d'acheminement d'un message SMS. Le microprocesseur 124 extraie de l'entête du message SMS l'identifiant de l'émetteur du message. Le microprocesseur recherche cet identifiant dans la table 126. Une fois qu'il a trouvé l'identifiant, il incrémente le compteur 126b, correspondant au nombre d'envoi de message SMS subventionné, d'une unité. On passe alors à une étape 207 de test du compteur.

L'étape 207 est facultative et dépend d'un accord qui existe entre l'opérateur de téléphonie mobile et le fournisseur de messages complémentaires. Cet accord peut stipuler que des clients de l'opérateur de téléphonie mobile ont le droit à un nombre limité d'envoi de messages SMS. Dans ce cas, dans l'étape 207 le microprocesseur 124 teste que la nouvelle valeur du compteur est bien inférieure au nombre de messages SMS auquel a le droit un utilisateur client. Si ce nombre est supérieur au nombre de messages auquel le client a le droit on passe à une étape 208 d'erreur.

Dans l'étape 208 l'opérateur interrompt l'acheminement du premier message et envoie éventuellement un message à l'utilisateur du téléphone 101 pour lui indiquer qu'il ne peut plus avoir recours, pour cette période temporelle, à l'envoi de messages SMS subventionnés. En effet, en général, les offres d'envoi de SMS gratuit concernant un nombre de SMS par période.

Dans l'étape 207 si l'utilisateur du téléphone 101 a le droit d'envoyer un message SMS subventionné on passe à une étape 209 de composition d'un deuxième message. Dans l'étape 209 soit le drapeau que comporte le premier message SMS est un identifiant de fournisseur de messages complémentaires, soit il faut avoir recours au contenu du champ 126c correspondant à l'émetteur du message SMS. Si le drapeau n'est pas un identifiant d'un fournisseur, on lit le champ 126c de la ligne précédemment identifiée lors de la recherche de l'identifiant, dans la table 126, de l'émetteur du premier message. Le champ 126c identifie alors un fournisseur de messages complémentaires qui subventionne les messages SMS de l'utilisateur.

Une fois en possession de l'identifiant du fournisseur de messages complémentaires, le microprocesseur 124 effectue une recherche de cet identifiant dans la table 127. Une fois que le microprocesseur a trouvé l'identifiant dans la table 127 il incrémente le compteur correspondant à cet identifiant afin de comptabiliser le nombre de messages SMS subventionnés par ce fournisseur de messages complémentaires. Puis le microprocesseur sélectionne parmi tous les messages correspondant à ce fournisseur de messages un message. Cette sélection peut par exemple se faire de manière aléatoire. Cette sélection s'effectue dans la table 127, dans la ligne correspondant au fournisseur de messages précédemment identifié. Une fois un message sélectionné, le microprocesseur 124 compose un deuxième message SMS. Ce deuxième message SMS comporte un en tête avec comme identifiant d'émetteur, par exemple, l'identifiant de l'émetteur du premier message SMS, comme l'identifiant du destinataire, le destinataire du premier message SMS. Les messages que comporte la table 127 sont par exemple des messages publicitaires pour l'entité subventionnant l'envoi des messages.

Ce deuxième message ne comporte pas de drapeau et le corps du message de ce deuxième message correspond au message complémentaire qui vient d'être sélectionné. On passe alors à une étape 210, similaire à l'étape 205, d'acheminement du deuxième message. Cette étape 210 se déroule d'une manière traditionnelle d'acheminement de messages SMS.

De l'étape 210 on passe alors à l'étape 205. Dans cette variante de l'invention le destinataire du premier message SMS reçoit deux messages. Un premier message SMS composé par l'utilisateur de l'appareil 101 et un deuxième message SMS composé automatiquement par le serveur 123 à la demande du fournisseur de messages complémentaires. Les droits correspondant à l'acheminement de ces deux messages SMS sont alors acquittés par le fournisseur de messages complémentaires.

De l'étape 205 on passe à une étape 211 de mise à jour de la liste de messages.

Dans l'étape 211 le microprocesseur 131, commandé par des codes d'instructions de la zone 133a compose, par exemple, un e-mail. Cet e-mail comporte un identifiant du fournisseur de messages complémentaires, c'est à dire le contenu de la mémoire 134, et une liste de messages correspondant aux messages enregistrés dans la mémoire 132. Cet e-mail comporte aussi un code d'instruction indiquant qu'il s'agit d'une liste de messages permettant la mise à jour des messages complémentaires utilisés pour produire des deuxièmes messages. Une fois cet e-mail composé, il est envoyé via le réseau 136 à destination du serveur 123. Lorsque le serveur 123 reçoit cet e-mail, il détecte, dans cet e-mail, la présence du code d'instruction indiquant la volonté du fournisseur de messages complémentaires de mettre à jour la liste de messages complémentaires. Le microprocesseur 124, commandé par des codes d'instructions de la zone 125b, extrait alors de cet e-mail les messages complémentaires et s'en sert pour remplacer, dans la mémoire 127, les messages complémentaires correspondant au fournisseur de messages identifiés par l'identifiant contenu dans l'e-mail.

La figure 2b décrit une variante de l'invention. La figure 2b montre l'étape 204. De l'étape 204 on passe alors à une étape 212 de production d'un deuxième message. L'étape 212 est identique à l'étape 209 si ce n'est qu'au lieu d'insérer le contenu du deuxième message dans un nouveau message SMS, on l'insère à la suite du premier message SMS dans le même message SMS. On passe à l'étape 213 d'acheminement du deuxième message.

S'il n'y a pas de drapeau on passe de l'étape 204 à une étape 214 d'acheminement du premier message SMS. Des étapes 213 et 214 on passe à l'étape 211. Les étapes 213 et 214 sont similaires à l'étape 205.

On constate dans cette variante que s'il y a présence d'un drapeau dans le premier message, celui-ci n'est plus acheminé tel quel. Le destinataire du premier message recevra donc un message constitué du corps du premier message et du message complémentaire. Cette variante permet d'envoyer qu'un seul message. Mais dans la mesure où un message SMS est limité à cent quarante caractères, cette variante limite aussi un nombre de caractères que peuvent utiliser à la fois l'utilisateur du téléphone 101 et le fournisseur de messages complémentaires pour composer leurs messages. Cependant cette limitation devrait disparaître avec l'évolution de la téléphonie mobile. Pour l'instant cette variante est plus intéressante dans le cas d'envoi d'e-mails qui ne sont pas limités dans leur taille. Dans tous les cas cette variante est intéressante car cela assure une meilleure probabilité de lecture pour le message complémentaire.

Dans la variante de la figure 2b, on n'a pas représenté les étapes équivalentes aux étapes 206 à 208. Cependant ces étapes existent dans cette variante et se situent, par exemple, entre l'étape 204 et l'étape 212.

Dans une variante serveur de l'invention la composition du message complémentaire est assurée par un serveur dédié à cet usage. Dans ce cas l'étape 204 est superflue puisque le simple fait d'adresser un message au serveur signifie que l'envoi de ce message est subventionné. Ainsi, dans la variante serveur, on passe de l'étape 203 à l'étape 206. Il n'est plus alors utile qu'il y ait un champ drapeau dans le message, cependant ce champ est remplacé par un identifiant du destinataire final, par exemple un numéro de téléphone ou une adresse électronique. Cet identifiant est utilisé pour le réacheminement du premier et du deuxième message. Dans la variante serveur on peut envisager un mode avec deux messages, un premier message composé et un deuxième message complémentaire. On peut aussi envisager un mode avec un seul message comportant le contenu du premier message et le contenu du message complémentaire. Ces deux modes correspondent en fait modes respectivement décrits pour les figures 2a et 2b respectivement.

Dans la variante serveur le message composé par l'utilisateur comporte donc un en-tête, comportant un identifiant de l'utilisateur et un identifiant du destinataire intermédiaire à savoir le serveur, un champ comportant un identifiant du destinataire final, et un message. Le destinataire final est en fait une personne à laquelle l'utilisateur bénéficiant d'une subvention souhaite envoyer un premier message.

Dans la variante serveur, la structure du serveur dédié est similaire à celle décrite pour le serveur 123. Ce serveur a une adresse sur le réseau servant à l'envoi des premiers messages. C'est cette adresse qui est utilisée comme destinataire intermédiaire lors de la composition du premier message.

Dans une variante de l'invention l'appareil recevant le message complémentaire comporte des moyens pour se connecter à un réseau de type Internet. Dans le cas d'un téléphone mobile il s'agit par exemple d'un navigateur WAP ( Wireless Application Protocol, ou protocole d'application sans fil), dans le cas d'un ordinateur personnel il s'agit par exemple d'un navigateur Internet. Il est donc possible d'inclure dans le message complémentaire des adresses, ou liens, sur le réseau Internet. Il est même possible d'inclure dans le message complémentaire une page au format WML (Wireless Markup Language, langage de balise sans fil) ou au format HTML (Hyper Text Markup Language, langage de balise hyper-texte ), selon qu'il s'agit d'un message SMS ou d'un message électronique.

Ainsi le destinataire final du message composé reçoit, par exemple sur son téléphone, soit une adresse qui lui permet de se connecter sur un site Internet de l'entité ayant subventionnée l'envoi du message. Le destinataire peut alors choisir de se connecter sur le site et le visiter.

Soit le destinataire reçoit une page WML qu'il peut visualiser sur son téléphone. Une page WML est l'équivalent d'une page HTML. WML et HTML respectivement sont deux langages de description permettant de réaliser des présentations multimédias sur un écran d'un téléphone mobile ou d'un ordinateur personnel respectivement. Ces deux langages sont utilisés en rapport avec le réseau Internet.

Le serveur 123, ou le serveur dédié, est capable de produire un bilan des messages complémentaires qui ont été envoyés. Ce bilan est produits par un parcours des mémoires 126 et 127 par le microprocesseur 124. Au cours de ce parcours le microprocesseur effectue un cumul des messages complémentaires par fournisseurs de messages complémentaires. En effet à chaque client de la mémoire 126 correspond, via la colonne 126c, un fournisseur de la mémoire 127. Dés lors il suffit de cumuler pour chaque fournisseur le contenu des champs 126b. Ainsi chaque fournisseur peut évaluer l'impact de ses subventions.

Dans une variante, dans l'étape 206 on ne comptabilise pas le nombre de messages complémentaires par utilisateur, mais uniquement par fournisseur de messages complémentaires. Cela simplifie la production des bilans, il n'est plus utile de faire un parcours conjoint des mémoires 126 et 127, mais diminue la finesse de la gestion des messages complémentaires car on dispose alors de moins d'informations sur leur utilisation.

## Revendications

1. - Procédé d'acheminement de message électronique dans lequel:
- on compose (201) un premier message électronique,
- on saisit (201) un identifiant d'un destinataire,
- on valide (201) le message et l'identifiant,
- on achemine (205) le premier message vers l'appareil identifié par l'identifiant via un réseau,
**caractérisé en ce que**:
- on récupère (209) l'identifiant du destinataire au cour de l'acheminement, si un drapeau d'interception est renseigné,
- on produit (209) un deuxième message électronique,
- on achemine (210) le deuxième message vers un appareil identifié par l'identifiant via un réseau.

2. - Procédé selon la revendication 1, **caractérisé en ce que** le deuxième message comporte (212) le premier message et une partie supplémentaire, le premier message tel que composé n'étant alors pas acheminé jusqu'au destinataire.

3. - Procédé selon l'une des revendications 1 ou 2, **caractérisé en ce que** le premier message comporte (201, 204) un champ pour indiquer que l'identifiant du destinataire de ce message peut être récupéré afin de produire le deuxième message.

4. - Procédé selon l'une des revendications 1 à 3, **caractérisé en ce qu'**on achemine le premier message via un premier serveur dédié, dont l'adresse est utilisée comme destinataire intermédiaire, pour composer le deuxième message.

5. - Procédé selon l'une des revendications 1 à 4, **caractérisé en ce qu'**on comptabilise (206) le nombre de deuxièmes messages produits par identifiant d'émetteur de premier message.

6. - Procédé selon la revendication 5, **caractérisé en ce qu'**on produit un bilan, par fournisseur de contenu de message, des deuxièmes messages produits à partir d'une table de correspondance entre des fournisseurs de contenu de deuxième message et des identifiants d'émetteur de premier message et du résultat du comptage.

7. - Procédé selon l'une des revendications 1 à 5, **caractérisé en ce qu'**on produit un bilan, par fournisseur de contenu de message, des deuxièmes messages produits.

8. - Procédé selon l'une des revendication 1 à 7, **caractérisé en ce que** le premier et le deuxième message sont de même nature, de préférence courrier électronique ou message SMS.

9. - Procédé selon l'une des revendication 1 à 8, **caractérisé en ce que** le premier et le deuxième message sont de natures différentes, de préférence courrier électronique et message SMS ou vice et versa.

10. - Procédé selon l'une des revendications 1 à 9, **caractérisé en ce qu'**on produit le deuxième message en fonction d'une table de message et d'un identifiant de l'émetteur du premier message.

11. - Procédé selon la revendication 10, **caractérisé en ce qu'**on met à jour le contenu de la table de message.

12. - Procédé selon l'une des revendications 1 à 11, **caractérisé en ce qu'**on compose un deuxième message en y incorporant un lien vers un site Internet.

13. - Procédé selon l'une des revendications 1 à 12, **caractérisé en ce qu'**on compose un deuxième message en utilisant un langage de description de présentation adapté au support recevant le deuxième message.

## Claims

1. - Method for routing electronic messages in which:
one composes (201) a first electronic message,
one enters (201) an addressee's identifier,
one validates (201) the message and the identifier,
one routes (205) the first message to the device identified by the identifier via a network,
**characterised in that**:
one recovers (209) the addressee's identifier during the routing process, if an interception flag is set,
one establishes (209) a second electronic message
one routes (210) the second message to a device identified by the identifier via a network.

2. - Method according to claim 1, **characterised in that** the second message comprises (212) the first message and an additional portion, the first message composed as such thus not being routed to the addressee.

3. - Method according to any one of claims 1 or 2, **characterised in that** the first message comprises (201, 204) a field to specify that the identifier of the addressee of this message may be recovered in order to establish the second message.

4. - Method according to any one of claims 1 to 3, **characterised in that** one routes the first message via a first dedicated server, of which the address is used as an intermediate addressee, to compose the second message.

5. - Method according to any one of claims 1 to 4, **characterised in that** one counts (206) the number of second messages established by the identifier of the sender of the first message.

6. - Method according to claim 5, **characterised in that** one establishes a report, for each message content supplier, of the second messages established on the basis of a table of correspondence between suppliers of the content of the second message and identifiers of the sender of the first message and of the result of the count.

7. - Method according to any one of claims 1 to 5, **characterised in that** one establishes a report, for each message content supplier, of the second messages established.

8. - Method according to any one of claims 1 to 7, **characterised in that** the first and the second message are of the same type, preferably electronic mail or SMS message.

9. - Method according to any one of claims 1 to 8, **characterised in that** the first and the second message are of different types, preferably electronic mail and SMS message or vice versa.

10. - Method according to any one of claims 1 to 9 **characterised in that** one establishes the second message according to a message table and an identifier of the sender of the first message.

11. - Method according to claim 10, **characterised in that** one updates the content of the message table.

12. - Method according to any one of claims 1 to 11, **characterised in that** one composes a second message incorporating a link to an Internet site therein.

13. - Method according to any one of claims 1 to 12, **characterised in that** one composes a second message using a presentation description language adapted to the support receiving the second message.

## Patentansprüche

1. - Verfahren zur Übermittlung von elektronischen Nachrichten, indem:
- man eine erste elektronische Nachricht erstellt (201),
- man eine Benutzeridentifizierung eines Adressaten eingibt (201),
- man die Nachricht und den Adressaten bestätigt (201),
- man die erste Nachricht über ein Netz jenem Gerät übermittelt (205), das durch die Benutzeridentifizierung identifiziert wurde,
**dadurch gekennzeichnet, dass**:
- man die Benutzeridentifizierung des Adressaten im Laufe der Beförderung erhält (209), wenn eine Erkennungsflagge eingegeben wurde,
- man die zweite Nachricht über ein Netz einem Gerät übermittelt, das durch die Benutzeridentifizierung identifiziert wurde.

2. - Verfahren nach Anspruch 1, **dadurch gekennzeichnet, dass** die zweite Nachricht die erste Nachricht und einen zusätzlichen Teil enthält (212), wobei die erste Nachricht, so wie sie aufgebaut ist, nicht bis zum Adressaten befördert wird.

3. - Verfahren nach einem der Ansprüche 1 oder 2, **dadurch gekennzeichnet, dass** die erste Nachricht ein Feld enthält (201, 204), um anzuzeigen, dass die Benutzeridentifizierung des Adressaten dieser Nachricht empfangen werden kann, um die zweite Nachricht zu erstellen.

4. - Verfahren nach einem der Ansprüche 1 bis 3, **dadurch gekennzeichnet, dass** man die erste Nachricht über einen ersten zugeordneten Server übermittelt, dessen Adresse als Zwischenadressat verwendet wird, um die zweite Nachricht zu verfassen.

5. - Verfahren nach einem der Ansprüche 1 bis 4, **dadurch gekennzeichnet, dass** man die Anzahl an zweiten erzeugten Nachrichten, nach Benutzeridentifizierung des Absenders der ersten Nachricht geordnet, registriert (206).

6. - Verfahren nach Anspruch 5, **dadurch gekennzeichnet, dass** man eine nach Lieferanten von Nachrichteninhalten geordnete Bilanz an zweiten Nachrichten, die basierend auf einer Entsprechungstabelle zwischen den Inhaltslieferanten für zweite Nachrichten und den Benutzeridentifizierungen von Absendern erster Nachrichten erzeugt werden, und dem Ergebnis der Registrierung erstellt.

7. - Verfahren nach einem der Ansprüche 1 bis 5, **dadurch gekennzeichnet, dass** man eine nach Lieferanten von Nachrichteninhalten geordnete Bilanz der zweiten erzeugten Nachrichten erstellt.

8. - Verfahren nach einem der Ansprüche 1 bis 7, **dadurch gekennzeichnet, dass** die erste und die zweite Nachricht gleich geartet, und vorzugsweise E-Mails oder SMS sind.

9. - Verfahren nach einem der Ansprüche 1 bis 8, **dadurch gekennzeichnet, dass** die erste und die zweite Nachricht anders geartet, und vorzugsweise E-Mails oder SMS oder umgekehrt sind.

10. - Verfahren nach einem der Ansprüche 1 bis 9, **dadurch gekennzeichnet, dass** man die zweite Nachricht gemäß einer Nachrichtentabelle und einer Benutzeridentifizierung des Absenders der ersten Nachricht erzeugt.

11. - Verfahren nach Anspruch 10, **dadurch gekennzeichnet, dass** man den Inhalt der Nachrichtentabelle aktualisiert.

12. - Verfahren nach einem der Ansprüche 1 bis 11, **dadurch gekennzeichnet, dass** man eine zweite Nachricht verfasst, und dabei einen Link zu einer Internet Website einfügt.

13. - Verfahren nach einem der Ansprüche 1 bis 12, **dadurch gekennzeichnet, dass** man eine zweite Nachricht verfasst und dabei eine Sprache zur Vorstellungsbeschreibung verwendet, die dem Support angepasst ist, der die zweite Nachricht empfängt.
